# EUROPEAN PATENT SPECIFICATION

(11) **EP 2 246 244 B1**
(45) Date of publication and mention of the grant of the patent: **09.01.2013**
(21) Application number: 08867014.6
(22) Date of filing: 19.12.2008
(51) Int. Cl.: B62K 11/04, B62J 23/00, B62J 25/00

(54) **TWO-WHEELED MOTOR VEHICLE**
ZWEIRÄDRIGES KRAFTFAHRZEUG
VÉHICULE À MOTEUR À DEUX ROUES

(30) Priority: 28.12.2007 JP 2007341398
(43) Date of publication of application: 03.11.2010
(73) Proprietor: Yamaha Hatsudoki Kabushiki Kaisha, Iwata-shi, Shizuoka 438-8501 (JP)
(72) Inventor: KATANO, Wataru, Iwata-shi Shizuoka 438-8501 (JP); SUSAKI, Tomoshige, Iwata-shi Shizuoka 438-8501 (JP)
(74) Representative: Schenk, Markus
(86) International application number: PCT/JP2008/073262
(87) International publication number: WO 2009/084491

(56) References cited:
- JP-A- 2002 264 868
- JP-A- 2002 264 868
- JP-A- 2002 284 067
- JP-A- 2003 267 283
- JP-A- 2005 145 098
- JP-A- 2006 082 727
- JP-A- 2007 001 533
- JP-A- 2007 077 926
- JP-A- 2007 314 101
- JP-A- 2008 201 150
- JP-U- 57 137 583
- JP-U- 58 178 089
- JP-U- 62 071 089
- JP-U- 62 203 792

## Description

### TECHNICAL FIELD

The present invention relates to a two-wheeled motor vehicle.

### BACKGROUND ART

Conventionally, there are two-wheeled motor vehicles that include an outside frame, as part of the body frame, which is exposed to the outside of a vehicle body and supports other vehicle components such as a rear swing arm. Some of such two-wheeled motor vehicles (refer to the patent document 1 described below) are provided with a resinous exterior cover next to the outside frame, and the inside of the two-wheeled motor vehicle is covered by this exterior cover. In two-wheeled motor vehicles of this type, the outside frame and the exterior cover are individually fixed to part of the body frame, such as a seat frame.
[Patent Document 1] JP-A-2007-230375

### DISCLOSURE OF THE INVENTION

### Problems to be Solved by the Invention

Exterior members on the side of the two-wheeled motor vehicle tend to be touched by a rider performing knee grip etc. For this reason, in a structure where a plurality of exterior parts are arranged next to each other, those exterior parts are desired to be formed and arranged as continuously as possible so as to have a seamless appearance. Also, those exterior parts are desired to be directly fixed to each other so as to be integrated. However, in the conventional constitution described above, the outside frame and the exterior cover are indirectly fixed to each other through attachment structures which are provided on the vehicle frame for each member. Therefore, deviation can arise in a relative position of the outside frame and the exterior cover, and wobble can arise at a join between the outside frame and the exterior cover.

JP 2007001533 A discloses a motorcycle according to the preamble of claim 1 having a swing arm for rotatably supporting the rear wheel which is supported in a vertically oscillatable manner on a vehicle body frame. A step stay to which steps for the driver and the co-driver are attached, is mounted to a frame of the motorcycle. A pivot covering is attached to the supporting part of the swing arm, the pivot covering is mounted to a step fitting part of the step stay by means of installation pieces which are equipped with respective grommets.

JP 2006082727 A discloses a motorcycle having a frame to which an engine, seats, a mud guard, a side cover for covering lower sides of the seats and a rear arm are mounted.

JP 2002264868 A discloses a motorbike comprising a main body part in which a step holder is formed into a triangular shape. A front enlarged part covers a center frame and has a truncated shape continuous to a front end edge part and a rear side lower end edge part of the side cover.

JP 2002284067 discloses a pillion step holder structure for a motorcycle. A body cover is arranged continuously to the pillion step holder.

It is an object of the present invention to provide a two-wheeled motor vehicle having an improved integration of its exterior parts.

This problem is solved by a two-wheeled motor vehicle in accordance with claim 1.

According to the present invention, continuity can be obtained in the outer shapes between the outside frame and the exterior cover. Accordingly, when force from the outside due to knee gripping or the like is applied, the force can be received by both of the outside frame and the exterior cover. Furthermore, because the locking structure of the outside frame extends toward the exterior cover, the locking structure is located close to the exterior cover. Accordingly, the exterior cover and the outside frame can be fixed rigidly. Thus, integration between the exterior parts can be improved.

### BRIEF DESCRIPTION OF DRAWINGS

FIG. 1 is a side view showing the exterior of a two-wheeled motor vehicle according to a first embodiment of the present invention.
FIG. 2 is a perspective view showing a whole body frame of the two-wheeled motor vehicle according to the first embodiment of the present invention.
FIG. 3 is an enlarged perspective view showing a side plate arranged on the left side of the vehicle.
FIG. 4 is a view showing a vertically extending portion that constitutes a body frame as seen from the front of the vehicle.
FIG. 5 is a view showing attachment of the side cover to the side plate.
FIG. 6 is a view showing attachment of a rubber cover to the side plate.
FIG. 7 is a side view showing the exterior of a two-wheeled motor vehicle according to a second embodiment of the present invention.
FIG. 8 is a perspective view of the exterior of the two-wheeled motor vehicle according to the second embodiment of the present invention.
FIG. 9 is a perspective view showing a whole body frame of the two-wheeled motor vehicle according to second embodiment of the present invention.
FIG. 10 is an enlarged perspective view showing a side plate arranged on the left side of the vehicle.
FIG. 11 is a view showing attachment of a side cover to a side plate.
FIG. 12 is a cross-sectional view taken along the line XII - XII in FIG. 11.
FIG. 13 is view showing an attachment portion of the side plate and the side cover as seen from the inside.

### BEST MODE FOR CARRYING OUT THE INVENTION

Preferred embodiments of the present invention will hereinafter be described in detail with reference to the drawings.

### [First embodiment]

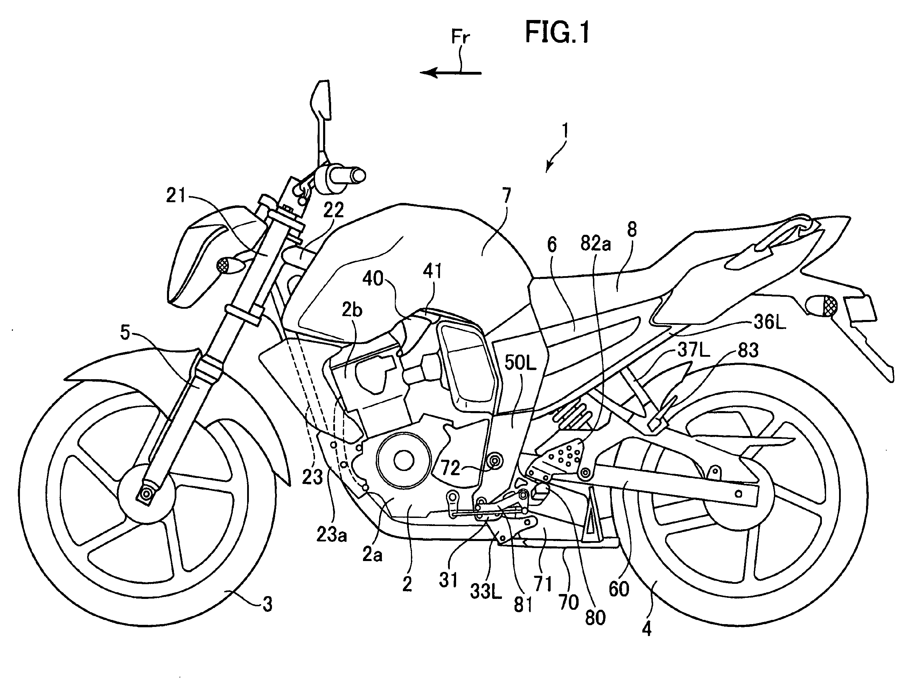

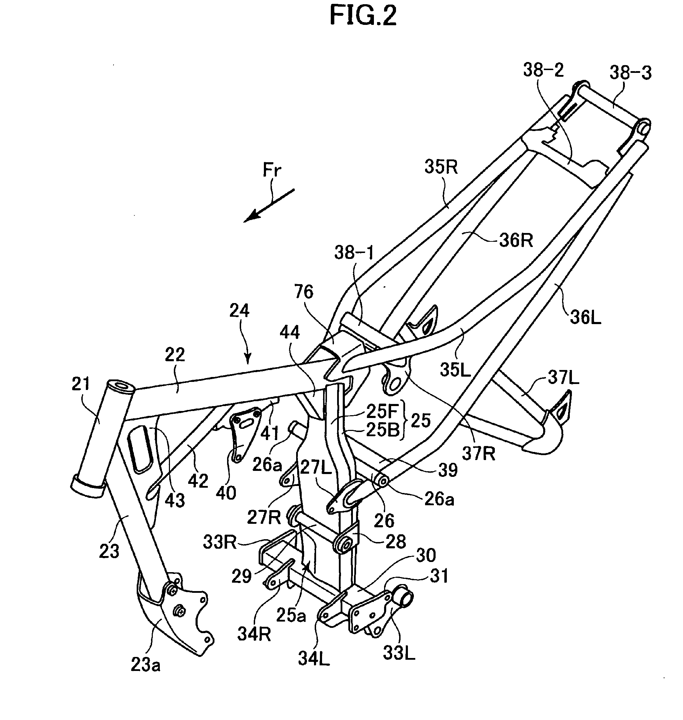

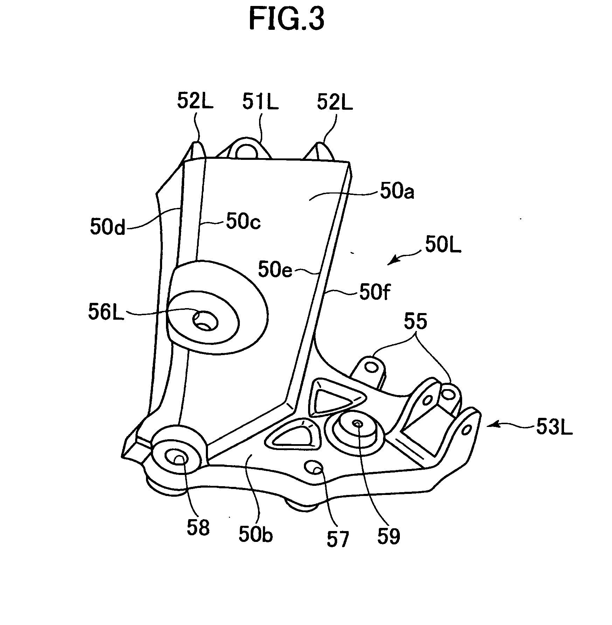

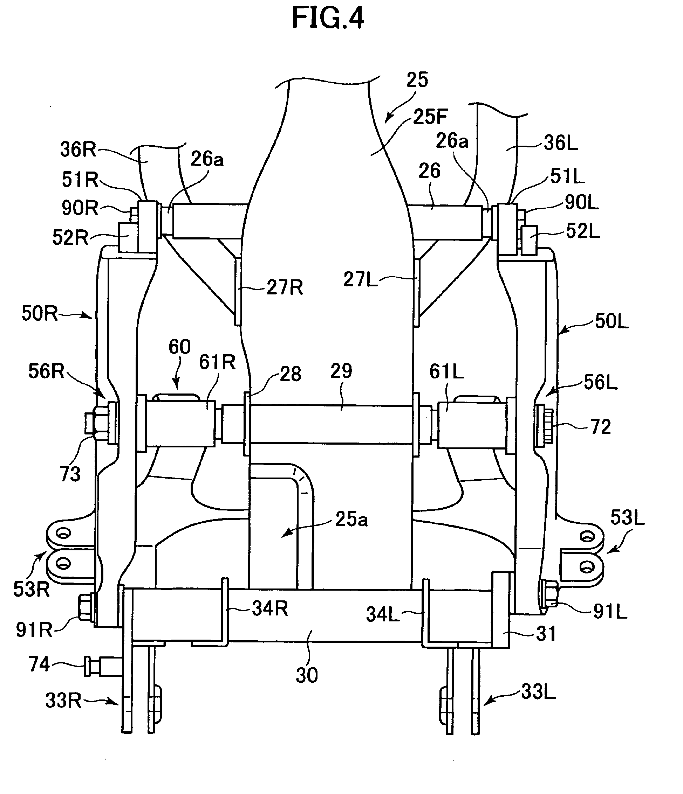

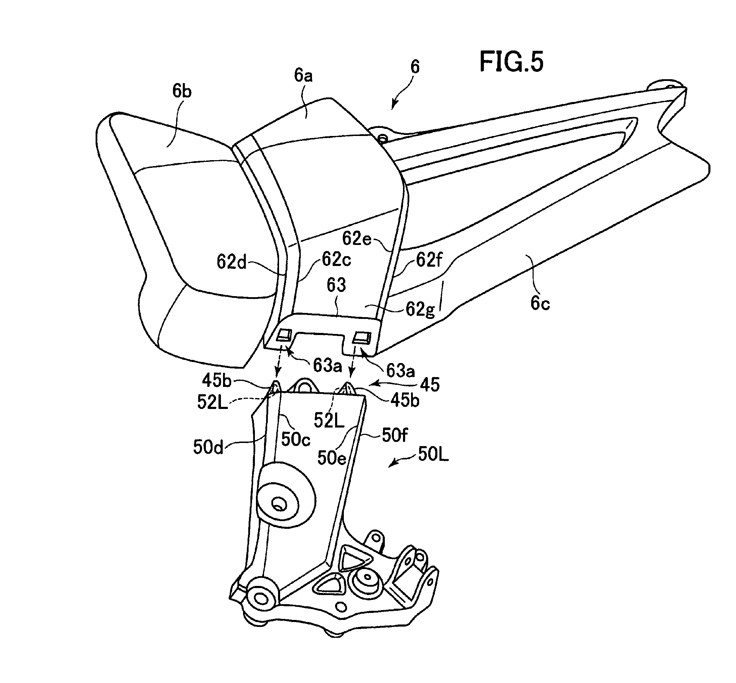

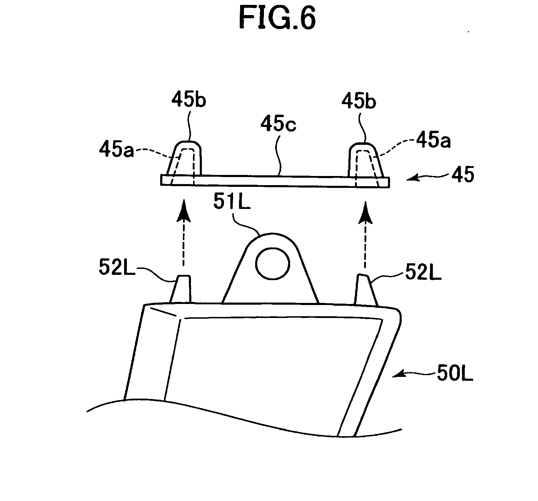

FIG. 1 is a side view showing an exterior of a two-wheeled motor vehicle 1 according to a first embodiment of the present invention. FIG. 2 is a perspective view showing an entire body frame of the two-wheeledmotorvehicle 1. FIG. 3 is an enlarged perspective view showing a side plate 50L arranged to the left of a vertically extending portion 25 of a main frame 24. FIG. 4 is a view of the vertically extending portion 25 as seen from the front of the vehicle. FIG. 5 is a view showing a fixing structure for fixing a side cover 6 to the side plate 50L. FIG. 6 is a view showing an attachment structure for attaching a rubber cover 45 to protrusions 52L, 52L disposed on an upper portion of the side plate 50L.

As shown in FIG. 1, in the two-wheeled motor vehicle 1, an upper portion of a front fork 5, which supports a front wheel 3 capable of rotating, is supported by a head pipe 21 so that the front fork 5 can turn to the right and left. As shown in FIG. 2, a fore-and-aft extending portion 22 of the main frame 24, the tip of which is welded to a rear side of the head pipe 21, linearly extends backwards and downwards from the head pipe 21, being positioned at the center of the vehicle width. Also a down tube 23 has its upper end welded to the head pipe 21, and extends linearly downward from the upper end. A bracket 23a is attached to a lower end of the down tube 23. As shown in FIG. 1, the bracket 23a is fixed to a front side of a crank case 2a of an engine 2. A hanger 40 is attached through a reinforcing member 41 to a middle portion of the fore-and-aft extending portion 22. The hanger 40 extends downwards from the middle portion of the fore-and-aft extending portion 22. A cylinder body 2b of the engine 2 is fixed to the distal end of the hanger 40.

A side plate 50L, which is one of a number of members for making the vehicle rigid, is arranged at the rear of the engine 2. A through bolt 72, which extends in the vehicle width direction, is arranged in the vicinity of the center of the side plate 50L in the vertical direction. The through bolt 72 supports a front end of a rear swing arm 60 that supports a rear wheel 4, while allowing the front end of the rear swing arm 60 to rotate. Accordingly, the rear swing arm 60 can swing up and down around the through bolt 72.

As shown in FIG. 1, a straddle type fuel tank 7 is disposed on the fore-and-aft extendingportion 22. A riding seat 8 is disposed to the rear of the fuel tank 2. As shown in FIG. 2, the fore-and-aft extending portion 22 of the main frame 24 is a straight round-pipe, which extends from the head pipe 21 to the vicinity of a rear end of the fuel tank 7. A saddle shaped bracket 76 is welded to a rear end of the fore-and-aft extending portion 22, while covering the rear end from the above. Front ends of paired right and left seat rails 35L, 35R are respectively welded to side surfaces of the saddle shaped bracket 76. The seat rails 35L, 35R are also constituted by a round pipe, extend outward and rearward from the side surface of the saddle shaped bracket 76, and then linearly extend rearward and upward. The seat rails 35L, 35R are coupled to each other at three positions by cross members 38-1, 38-2, 38-3 arrayed in this order from the front of the vehicle. A riding seat 8 is mounted on these cross members 38-1, 38-2, 38-3.

A vertically extending portion 25, which extends linearly in the vertical direction of the vehicle, is welded to the rear end of the fore-and-aft extending portion 22. Each of the fore-and-aft extending portion 22 and the vertically extending portion 25 are welded to the saddle shaped bracket 76 and a reinforcing member 44. The fore-and-aft extending portion 22 and the vertically extending portion 25 are rigidly fixed to each other by the saddle shaped bracket 76 and the reinforcing member 44 arranged inside a corner of a connection portion between them, and thus constitute the main frame 24.

Areinforcingmember 43 is welded to the inside of the connection portion among the fore-and-aft extending portion 22, the head pipe 21, and the down tube (round pipe) 23. Furthermore, the reinforcing member 41 is welded to the lower side of the middle portion of the fore-and-aft extending portion 22. A reinforcing pipe 42 bridges between the reinforcing member 41 and the reinforcing member 43. Accordingly, the fore-and-aft extending portion 22, the head pipe 21, and the down tube 23 are rigidly fixed to each other.

The vertically extending portion 25 is constituted by a front pipe 25F and a back pipe 25B, each of which is a square pipe with a rectangular cross section. In the vertically extending portion 25, the front pipe 25F and the back pipe 25B are affixed on each other by welding, while being arranged such that their wider side surfaces face in the fore-and-aft direction of the vehicle body. The vertically extending portion 25 has an even width at its upper portion, its width becomes gradually wider at its middle portion, and its width becomes an even width again at its lower portion. That is, the vertically extending portion 25 is formed such that its width changes in accordance with positions in the extending direction (vertical direction). As a result, the rigidity required for the vehicle body is secured.

A first supporting pipe 26 is welded to a rear surface of the back pipe 25B of the vertically extending portion 25. The first supporting pipe 26 is a round pipe, and extends in the vehicle width direction. A cap 26a, having a female screw thread formed therein, is welded to both right and left ends of the first supporting pipe 26.

L-shaped common brackets 27L and 27R are welded to both side surfaces of the vertically extending portion 25 and positioned below the first support pipe 26. The common brackets 27L and 27R are formed into a shape of a flat plate whose rear ends are bent inward. Their bent portions are welded to a rear surface of the back pipe 25B, and inner surfaces of their portions extending in the fore-and-aft direction are welded to side surfaces of the front pipe 25F and side surfaces of the back pipe 25B. The front ends of each of the common brackets 27L and 27R protrude further forward than the front surface of the front pipe 25F of the vertically extending portion 25. In a protruding portion of the common brackets 27L and 27R, a bolt insertion hole to be fixed to an upper portion of the rear surface of the crankcase 2a is formed. The front ends of each of the back stays 36L and 36R constituted by a roundpipe are respectively welded on outside surfaces of portions of the common brackets 27L and 27R, which extend in the fore-and-aft direction. The back stays 36L and 36R extend rearward and upward, and their rear ends are respectively welded to lower surfaces of the rear portions of the seat rails 35L and 35R. Moreover, a cross member 39 is welded on the front end sides of the back stays 36L and 36R, thereby coupling the back stays 36L and 36R together. Moreover, proximal ends of rear footrest stays 37L and 37R for mounting a footrest 83 (refer to FIG. 1) on which fellow passengers put their feet are welded on middle portions of the back stays 36L and 36R. The rear footrest stays 37L and 37R extend downward from their proximal portions.

A pivot bracket 28, which is an elongated plate including left and right portions bent forward, is attachedbelow the common brackets 27L and 27R. Each bent portion of the pivot bracket 28 is welded to the side surfaces of the front pipe 25F and the back pipe 25B, and the portion between the bent portions is welded to a rear surface of the back pipe 25B. Front ends of the bent portions protrude further forward than the front surface of the front pipe 25F. Through holes for inserting a pivot support pipe 29 , which is a round pipe extending straight in the vehicle width direction, are formed in the protruding portions of the pivot bracket 28. The pivot support pipe 29 is inserted through and fixed to the through holes by welding.

A second support pipe 30 extending straight in the vehicle width direction is disposed on a lower end of the vertically-extending portion 25. The vertically extending portion 25 and the second support pipe 30 are connected to each other while forming a shape of an upside-down letter T. The second support pipe 30 is a square pipe with a rectangular cross section and arranged such that its wider side surfaces face in the vertical direction. An upper surface of the second support pipe 30 is welded to a lower end surface of the vertically extending portion 25. A small plate 31 in a shape of a flat plate is welded to a left end of the second support pipe 30 while closing the opening end of the second support pipe 30. Moreover, a center stand bracket 33L constituted by two parallel plates extending downward is welded on the left portion of the lower surface of the second support pipe 30. An exhaust chamber 71 to which an exhaust pipe of the engine 2 is connected is fixed to the center stand bracket 33L. A left proximal portion of the center stand 70 surrounding the exhaust chamber 71 when being arranged in the closed-posture is rotatably fixed to the center stand bracket 33L (refer to FIG. 1). A center stand bracket 33R is welded on the right end side of the second support pipe 30. The center stand bracket 33R is also constituted by two parallel plates extending downward, and its outer plate is welded to an opening right end of the second support pipe 30 while closing the opening. Its inner plate is welded on the lower surface of the second support pipe 30. Aproximal portion of a right portion of the center stand 70 is fixed to the center stand bracket 33R while being capable of rotating. A spring attachment boss 74, to which one end of a spring (not shown in the figures) for urging the center stand 70 to the closed-posture or the standing-posture is attached, is formed in the center stand bracket 33R. The other end of the spring is attached to a leg of the center stand 70.

Engine brackets 34L, 34R are welded to a front surface of the second supporting pipe 30 while protruding forward. Lower portions of the rear surface of the crankcase 2a are fixed by using the engine brackets 34L, 34R. Specifically, a front portion of the crankcase 2a of the engine 2 is fixed to the down tube 23, and rear upper portion of the crankcase 2a is fixed to the vertically extending portion 25 through the common brackets 27L, 27R. The rear lower portion of the crankcase 2a is fixed to the vertically extending portion 25 through the engine brackets 34L, 34R and the second supporting pipe 30. The cylinder body 2b is fixed to the fore-and-aft extending portion 22 through the hanger 40 and the reinforcing member 41. In this way, the engine 2 is rigidly fixed to various portions of the body frame, and serves as one of a number of members for making the vehicle rigid.

A recess 25a to evade the bulge of the crankcase 2a is formed in a right lower portion of the front surface of the front pipe 25F.

As shown in FIG. 1 and FIG. 4, the side plates 50L, 50R are separately arranged to the right and left of the vertically extending portion 25 of the main frame 24. The side plates 50L, 50R are aluminum die cast members (outside frames) that have generally the same shape as each other, and function as members for making the vehicle rigid together with the main frame 24. At the same time, the side plates 50L, 50R are arranged to be exposed to the side of the vehicle, and thus function as a metallic exterior cover of the vehicle. Hereinafter, description is given mainly for the side plate 50L. Corresponding portions of the side plate 50R are indicated by corresponding symbols, and their description is omitted.

As shown in detail in FIG. 3, the side plate 50L integrally includes a plate portion 50a formed into a plate shape extending in the vertical direction of the vehicle, and a footrest bracket portion 50b extending rearward from a lower portion of the plate portion 50a, and thus the side plate 50L is generally formed into the shape of a letter L in a side view. The plate portion 50a has two corners 50c, 50d formed on its edge on the front side, the corners 50c, 50d extending in the vertical direction and generally parallel to each other. Also, the plate portion 50a has two corners 50e, 50f formed at its edge on the rear side, the corners 50e, 50f extending in the vertical direction and generally parallel to each other. A surface (first frame surface) extending toward the side cover 6 is formed between the corner 50c and the corner 50e. Also, a surface (second frame surface) extending toward the side cover 6 is formed between the corner 50c and the corner 50d. Furthermore, a surface (third frame surface) extending toward the side cover 6 is formed between the corner 50e and the corner 50f. With this structure, the rigidity of the plate portion 50a is improved. An insertion hole 56L, through which the through bolt 72 serving as a pivot is inserted, is formed in a middle portion of the plate portion 50a. As shown in FIG. 4, the through bolt 72 inserted into the insertion hole 56L sequentially passes a cylindrical collar portion 61L formed in the left front end of the rear swing arm 60, a pivot supporting pipe 29, and a cylindrical collar portion 61R formed in the right front end of the rear swing arm 60, and then the through bolt 72 reaches an insertion hole 56R formed in the side plate 50R. Nut 73 is screwed on the tip of the through bolt 72. In this way, the rear swing arm 60 is supported by the through bolt 72 while being capable of swinging.

Protrusions (locking pieces) 52L, 52L spaced apart from each other in the fore-and-aft direction of the vehicle and extending upward are formed on the upper end surface of the plate portion 50a of the side plate 50L. Further, an upper attachment bracket portion 51L is formed on the inner side, defined in the vehicle width direction, of a portion between the protrusions 52L, 52L (that is, formed on the back side of the plate portion 50). The upper attachment bracket portion 51L is formed in the shape of a plate extending upward and arranged to face in the vehicle width direction. The upper attachment bracket portion 51L has a bolt insertion hole formedgenerallyinitsmiddle. As shown in FIG. 4, a bolt 90L inserted into the insertion hole is screwed to the left end of the first supporting pipe 26, that is, screwed to the cap 26a. In this way, an upper portion of the side plate 50L is fixed to one end of the first supporting pipe 26 by the bolt 90L. As shown in FIG. 4, with regard to the side plate 50R arranged to the right of the vertically extending portion 25, the bolt 90R is inserted into the opening of the attachment bracket 51R, and the bolt 90R is screwed to the right end of the first supporting pipe 26, that is, screwed to the cap 26a. As a result, an upper portion of the side plate 50R is fixed to the other end of the first supporting pipe 26.

A fixing bolt insertion hole 58 is also formed in the lower end of the plate portion 50a. As shown in FIG. 4, a bolt 91L passed through the fixing bolt insertion hole 58 is screwed to the small plate 31. Furthermore, a fixing bolt insertion hole 57 is formed in the lower edge of a footrest bracket portion 50b. A bolt (not shown in the figures) inserted into the fixing bolt insertion hole 57 is screwed to the small plate 31. In this way, a lower portion of the side plate 50L is fixed to the vertically extending portion 25 of the main frame 24 at two positions spaced apart from each other in the fore-and-aft direction of the vehicle. Similarly, the lower edge of the side plate 50R is also screwed to the center stand bracket 33R at two positions spaced away from each other in the fore-and-aft direction of the vehicle, and fixed to the vertically extending portion 25 of the main frame 24 through the center stand bracket 33R. The side plate 50L is rigidly fixed to the body frame in positions above and below the through bolt 72 serving as the pivot.

A footrest bracket 53L supporting a proximal end of a footrest 80 (refer to FIG. 1) is formed at the rear end portion of the footrest bracket portion 50b of the side plate 50L. A shaft insertion hole 59 in which a rotational shaft of a shift pedal 81 (refer to FIG. 1) is inserted is formed generally in the center of the footrest bracket portion 50b. Cover bracket portions 55, 55 are formed in the upper edge of the footrest bracket portion 50b. A metal cover 82a (refer to FIG. 1), which covers the side of the rear swing arm 60, is fastened to the cover bracket portions 55, 55 by bolt.

As shown in FIG. 1, a portion below the rear portion of the fuel tank 7 and a portion below the riding seat 8 are covered by a side cover 6 which is a resinous exterior cover. As shown in FIG. 5, the side cover 6 includes: a carburetor cover portion 6b covering the side of a carburetor (not shown in the figures) arranged to the rear of the engine 2; a frame cover portion 6a, which is located posterior to the carburetor cover portion 6b and covers a portion which is located on the side of the vertically extending portion 25 as well as above the side plate 50L; and an seat lower cover portion 6c, which is located posterior to the frame cover portion 6a and covers a portion between the seat rail 35L and the back stay 36L in a side view. The side cover 6 is a resinous exterior member integrally formed by including those portions. The side cover 6 is formed in the shape of a bowl opening inward, so that a flat abutting wall 63 extending inward of the vehicle body from the lower edge of the outer lateral surface (first cover surface) 62g is formed on the lower side of the frame cover portion 6a. A side surface (cover end surface) of the abutting wall 63 abuts on an upper end surface of the side plate 50L. The abutting wall 63 has generally the same shape as the upper end surface (frame end surface) of the side plate 50L. Two rectangular shaped holes 63a, 63a are formed in the abutting wall 63, being spaced apart from each other in the vehicle fore-and-aft direction. Two corners 62c (cover edge line) and 62d extending in the vertical direction of the vehicle are formed in the front portion of the frame cover portion 6a, and two corners 62e (cover edge line) and 62f extending in the vertical direction of the vehicle are also formed in the rear portion of the frame cover portion 6a. A surface (second cover surface) extending toward the side plate 50L is formed between the corner 62c and the corner 62d. Also, a surface (third cover surface) extending toward the side plate 50L is formed between the corner 62e and the corner 62f.

The first cover surface extends continuous from the first frame surface so as to be smoothly continuous to the first frame surface. Similarly, the second cover surface and the third cover surface also extend continuous from the second frame surface and the third frame surface so as to be smoothly continuous to the second frame surface and the third frame surface, respectively. The corners 62c, 62d are respectively continuous from the corners 50c, 50d of the side plate 50L in the vertical direction, in a state where the side cover 6 is attached to the vehicle body. That is, a lower end of the corner 62c of the side cover 6, which extends generally in the same direction as the corner 50c of the side plate 50L, is located on the extension of the corner 50c. A lower end of the corner 62d of the side cover 6, which extends generally in the same direction as the corner 50d of the side plate 50L, is located on the extension of the corner 50d of the side plate 50L. Similarly, a lower end of the corner 62e of the side cover 6, which extends generally in the same direction as the corner 50e of the side plate 50L, is located on the extension of the corner 50e of the side plate 50L. A lower end of the corner 62f of the side cover 6, which extends generally in the same direction as the corner 50f of the side plate 50L, is located on the extension of the corner 50f of the side plate 50L. Accordingly, the side cover 6 is not easily deformed when forced to press the side cover 6 against the side plate 50L acts.

As described above, paired protrusions 52L, 52L extending upward of the vehicle body are disposed on the upper end surface (frame end surface) of the side plate 50L. These protrusions 52L, 52L are positioned corresponding to the holes 63a, 63a of the side cover 6. In their attached state, protrusions 52L, 52L are inserted into the holes 63a, 63a of the side cover 6 respectively. That is, each of the protrusions 52L, 52L extends to a position where it overlaps with the side cover 6 in a side view of the vehicle, and its tip is located on the back side of the side cover 6. As shown in FIG. 6, the rubber cover 45 covers the protrusions 52L, 52L. The rubber cover 45 includes a flat plate portion 45c formed like a thin plate that has a shape and size in correspondence with the upper end surface of the plate portion 50a of the side plate 50L. Two protrusions 45b, 45b are formed on one surface of the flat plate portion 45c while being spaced apart from each other. The size of the protrusions 45b, 45b is generally equal to the size of the holes 63a, 63a of the side cover 6. Holes 45a, 45a, which have generally the same shape and size as the protrusions 52L, 52L of the side plate 50L, are formed in the back side of each protrusion 45b. The rubber cover 45 is attached to the side plate 50L such that the protrusions 52L, 52L of the side plate 50L are located in the holes 45a, 45a and the flat plate portion 45c of the rubber cover 45 is laid on the portions of the upper end surface of the plate portion 50a of the side plate 50L that are positioned between the protrusions 52L, 52L. In this state, the side cover 6 is attached to the side of the vehicle in a state where the protrusions 45b, 45b are fitted into the holes 63a, 63a. Also, an upper portion of the side cover 6 is fixed to the seat rail 35L by bolts (not shown in the figures).

The two-wheeled motor vehicle 1 described above includes the side plate 50L, which is a metallic exterior cover, and the side cover 6, which is a resinous exterior cover. The side plate 50L includes, on the inner side of the outer lateral surface 62g, a locking structure that locks the side cover 6. Because the side cover 6 is locked to the side plate 50L by the locking structure, without using a special structure for fixing the side cover 6 to the vehicle body, the side plate 50L and the side cover 6 can be coupled to each other with a simple structure. Also, both of the side plate 50L and the side cover 6 can effectively cover the inside of the vehicle.

Especially, according to the present embodiment, protrusions (locking pieces) 52L, 52L extending toward the side cover 6 are formed on the upper end surface of the side plate 50L. Further, Holes 63a, 63a, into which the protrusions 52L, 52L are inserted, are formed in the abutting wall 63 of the side cover 6, which faces the upper end surface of the side plate 50L. Therefore, the locking structure can be realized simply, and the side cover 6 can be easily attached to or detached from the side plate 50L. Also, because the protrusions 52L, 52L are formed on the metallic side plate 50L, both members canbe rigidly fixed. It is also possible for a plurality of protrusions to be formed on the abutting wall 63 of the side cover 6 and for holes into which these protrusions are inserted to be formed in the upper end surface of the side plate 50L.

According to the present embodiment, the protrusions 52L, 52L are covered by the rubber cover 45 made of rubber as an elastic material. The rubber cover 45 functions as a cushioning member between the side cover 6 and the side plate 50L. The rubber cover 45 may be made of various elastic materials such as resin. The side cover 6 can be protected by the rubber cover 45.

The two-wheeled motor vehicle 1 includes the main frame 24 extending from the head pipe 21 to the rear while being positioned at the center in the vehicle width center and reaching a pivot that supports the rear swing arm 60. Further, the side plate 50L is disposed on one side of the main frame 24, and swingably supports the rear swing arm 60 together with the main frame 24. That is, the two-wheeled motor vehicle 1 includes a vehicle body frame structure of a so-calledmono backbone type. According to the present embodiment, in such a vehicle body frame structure, an area above the side plate 50L can be effectively covered. The footrest bracket portion 50b is integrally formed in the side plate 50L, and provided with the footrest 80 for riders to put their feet. With this structure, another bracket for attaching the footrest 80 does not need to be provided, so that the number of parts in the vehicle can be reduced and the cost of the vehicle can be lowered.

According to the present embodiment, the corners 50c, 50d, 50e, 50f extending in the vertical direction of the vehicle are formed in the side plate 50L. Similarly, the corners 62c, 62d, 62e, 62f continuing to those corners are also formed in the side cover 6. That is, corners that continue to the corners of the metallic exterior cover are also formed in the resinous cover. Accordingly, excessive deformation can be prevented when the side cover 6 is pressed against the side plate 50L.

### [Second embodiment]

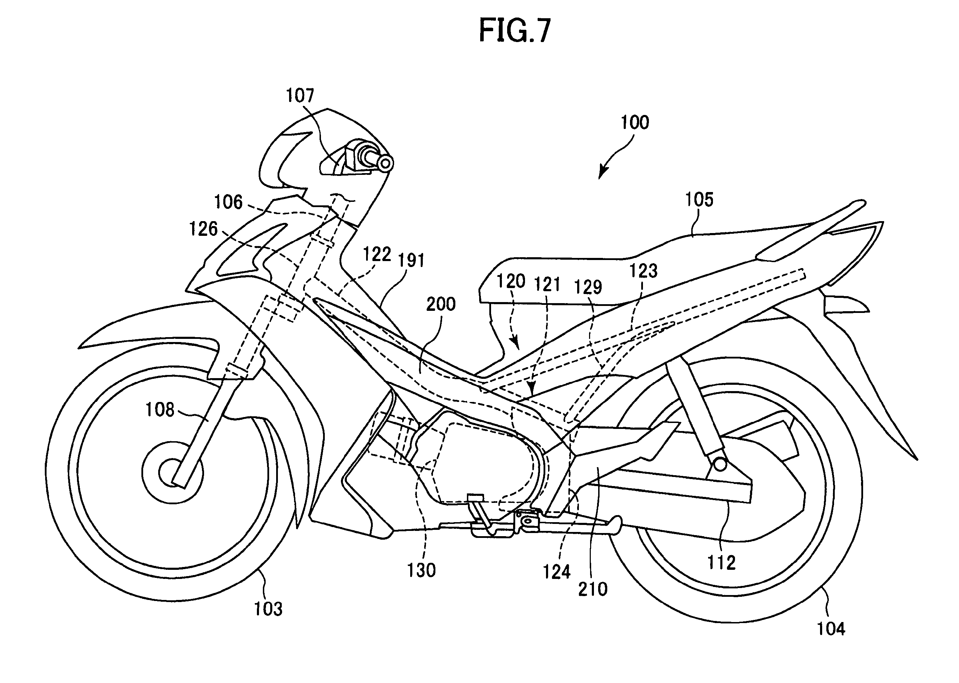

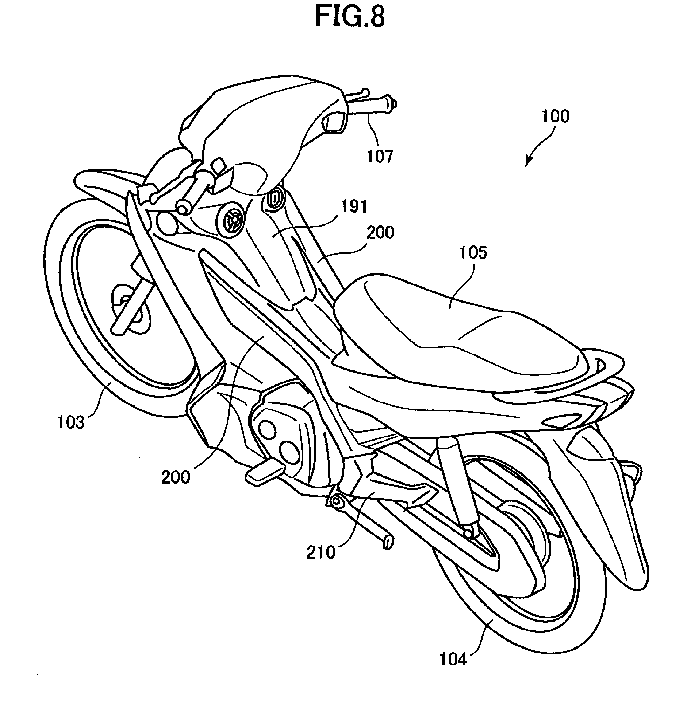

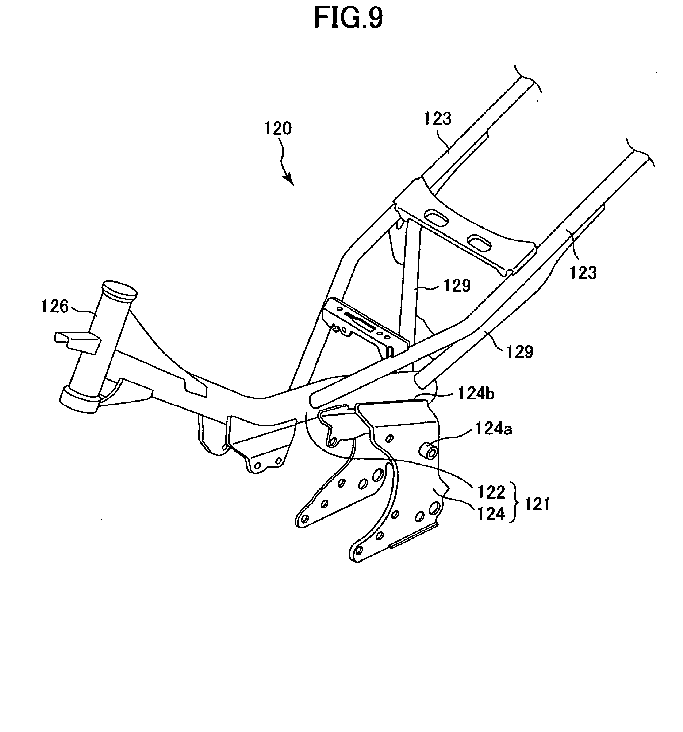

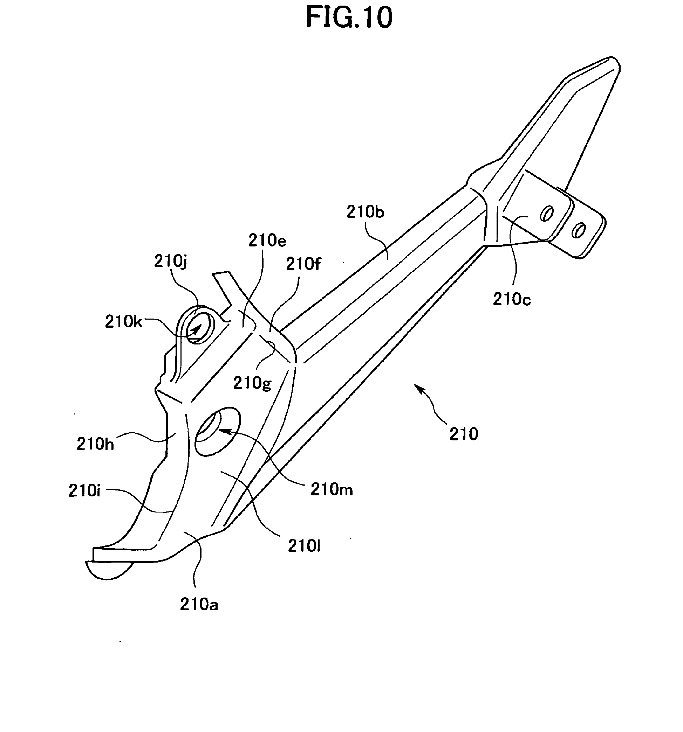

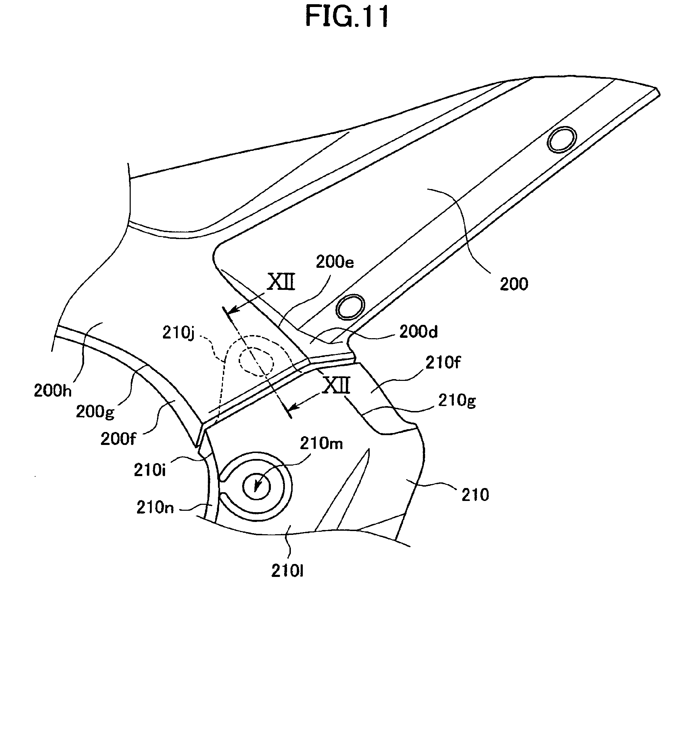

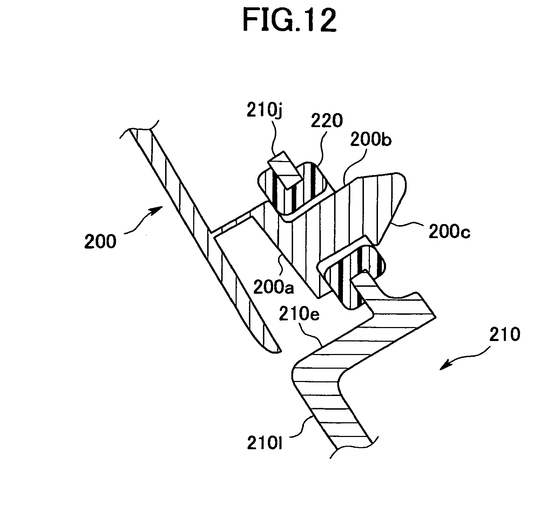

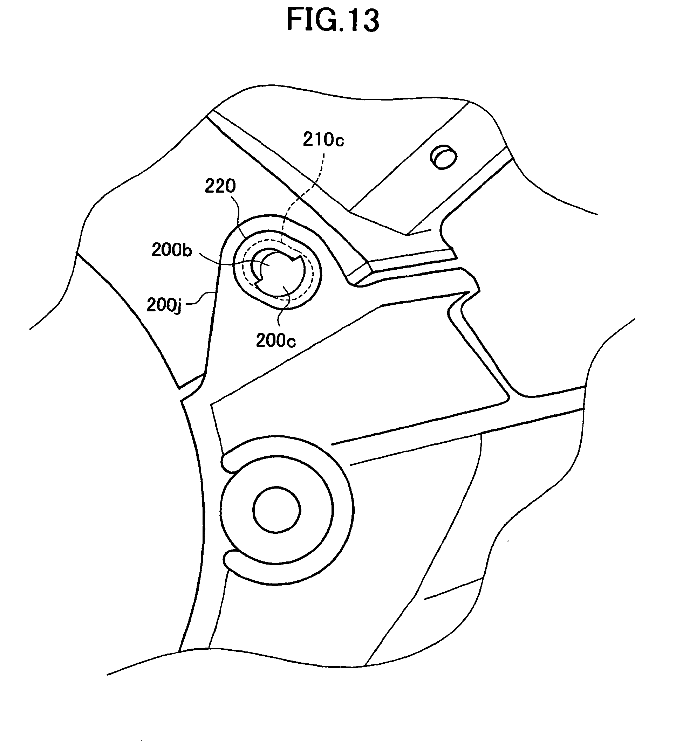

FIG. 7 is a side view of a two-wheeled motor vehicle according to a second embodiment of the present invention. FIG. 8 is a perspective view of a two-wheeled motor vehicle 100 as seen obliquely from the rear left. FIG. 9 is a perspective view of the whole body frame. FIG. 10 is a perspective view showing the side plate on the left side of the vehicle. FIG. 11 is a side view showing attachment structure of the side cover to the side plate. FIG. 12 is a cross sectional view taken along the line XII - XII in FIG. 11. FIG. 13 is a view showing an attachment portion of the side plate and the side cover as seen from the inside.

As shown in FIG. 7, the two-wheeled motor vehicle 100 includes a body frame 120, a front wheel 103, a rear wheel 104, a seat 105, and an engine 130. The body frame 120 includes, on its front end, a head pipe 126 that supports a steering shaft 106. A handlebar 107 is attached to an upper end of the steering shaft 106. A front suspension 108 is connected to the lower end of the steering shaft 106, and the front wheel 103 is supported at a lower end of the front suspension 108.

As shown in FIG. 7 and FIG. 8, the two-wheeled motor vehicle 100 is a so-called underbone-type two-wheeled motor vehicle. As shown in FIG. 7 and FIG. 9, the body frame 120 includes a mainframe portion 121 arranged at the center in the vehicle width direction, extends obliquely backward and downward above the engine 130, and then reaches the back side of the engine 130. As shown in FIG. 9, the mainframe portion 121 is constituted by a down tube 122 and paired right and left rear frame portions 124, 124. The down tube 122 is arranged at the center in the vehicle width direction, and extends obliquely downward and backward above the engine 130 from the head pipe 126. The right and the left rear frame portions 124, 124 are plate shaped members and arranged spaced apart in the vehicle width direction while facing each other in the vehicle width direction. An upper edge 124b of the rear frame portion 124 is fixed by welding to the outside peripheral surface of the rear end of the down tube 122. The down frame portion 124 extends downward from the rear end of the down tube 122 while being positioned at the back of the engine 130. In the two-wheeled motor vehicle 100, a fuel tank or other devices are not arranged above the down tube 122 or between the seat 105 and the head pipe 126, so that the down tube 122 is covered by a center cover 191 from above. The center cover 191 extends obliquely downward and backward along the down tube 122.

As shown in FIG. 7, a rear swing arm 112 extending in the fore-and-aft direction is arranged at the back of the engine 130. The axle of the rear wheel 4 is supported by the rear end of the rear swing arm 112. A support portion 124a supporting a pivot (not shown in the figures) is disposed in the rear frame portion 124, and the front end of the rear swing arm 12 is supported by the rear frame portion 124 through the pivot. Accordingly, the rear swing arm 112 and the rear wheel 104 are capable of bouncing in vertical direction around the pivot.

The body frame 120 includes paired right and left seat rails 123, 123 extending obliquely upward and backward from the middle of the down tube 122. The seat 105 is arranged above the seat rails 123, 123, and the seat rails 123, 123 support the seat 105. A reinforcing tube 129 bridges between the seat rail 123 and the rear end of the down tube 122.

As shown in FIG. 7 and FIG. 8, a metallic side plate 210, which enhances the rigidity of the vehicle body as a part of the vehicle body frame, is mounted on the left side of the vehicle while being exposed to the side. The side plate 210 also functions as an exterior cover, and is fixed to the rear frame portion 124 from the outer side by bolt. A side cover 200, which is a resinous exterior cover, is arranged on the left side of the vehicle while being exposed to the side. A front portion of the side cover 200 extends backward and downward from the left side of the vicinity of the front end of the down tube 122 while covering the left side of the down tube 122. A rear portion of the side cover 200 extends backward and upward while covering the left side of the reinforcing tube 129.

As shown in FIG. 10, the side plate 210 includes: a body portion 210a covering the side of the rear frame portion 124; and a footrest stay portion 210b continuing to the rear portion of the body portion 210a and extending backward and upward. A footrest bracket 210c, to which a footrest for a passenger is attached, is formed in the rear end of the footrest stay portion 210b.

The body portion 210a includes: a first frame surface 2101 facing the side of the vehicle; a second frame surface 210h facing the front of the vehicle; a third frame surface 210f facing the rear of the vehicle; and a frame end surface 210e that is continuous to the upper edges of these surfaces. The first frame surface 2101 and the second frame surface 210h are arranged to make an angle, and the corner 210i between these surfaces extends in the vertical direction to form an edge line. Also, the first frame surface 2101 and the third frame surface 210f are arranged to make an angle, and the corner 210g between these surfaces extends in the vertical direction to form an edge line. A round hole 210 m is formed in the center of the first frame surface 2101. The body portion 210a is attached to the rear frame portion 124 such that the round hole 210m and the support portion 124a are located on the same axis. A pivot bridges between the round hole 210m and the support portion 124a, and the rear swing arm 112 is supported by the pivot while being capable of swinging.

The frame end surface 210e faces the side cover 200 arranged above the frame end surface 210e. A locking piece 210j, which is aplate-shapedpiece, extends toward the side cover 200 fromaposition on the frame end surface 210e, which is a position located further inward in the vehicle width direction than the first frame surface 2101 of the frame end surface 210e. As shown in FIG. 11, the locking piece 210j extends to the position that overlaps with the side cover 200 in a side view of the vehicle.

On the other hand, as shown in FIG. 11, the side cover 200 includes: a first cover surface 200h facing the side of the vehicle; a second cover surface 200f facing the front of the vehicle; and a third cover surface 200d facing the rear of the vehicle. The first cover surface 200h extends continuous from the first frame surface 2101. The second cover surface 200f extends continuous from the second frame surface 210h. The third cover surface 200d extends continuous from the third frame surface 210f. The first cover surface 200h and the second cover surface 200f are arranged to make an angle, and the corner 200g between these surfaces extends in a vertical direction from an edge line. This edge line extends to continue to the edge line between the first frame surface 2101 and the second frame surface 210h. Similarly, the first cover surface 200h and the third cover surface 200d are arranged to make an angle, and the corner 200e between these surfaces extends in the vertical direction to form an edge line. This edge line extends to continue to the edge line between the first frame surface 2101 and the third frame surface 210f.

As shown in FIG. 12 and FIG. 13, the side cover 200 also includes a structure for attachment to the side plate 210. Specifically, a base 200a supported in a cantilever manner is formed in the back side of a portion of the side cover 200, which is a portion close to the side plate 210. The base 200a has a locking pin 200b formed thereon, which protrudes inward of the vehicle. The locking pin 200b is formed substantially in the shape of a round stick. As shown in FIG. 13, a latch 200c bulging out in the radius direction of the locking pin 200b is formed on a part of the periphery of the tip of the locking pin 200b. On the other hand, the locking piece 210j of the side plate 210 extends generally parallel with the first frame surface 2101, and an elongated hole 210k is formed in the tip of the locking piece 210j. The extending direction of the elongated hole 210k is generally the same as the extending direction of the front portion of the side cover 200. As a result, the side cover 200 is allowed to move along the extending direction of the front portion of the side cover 200 to some extent. A rubber bush 220 as a cushioning member is fitted inside the long hole 210k. The locking pin 200b is inserted into a hole formed in the rubber bush 220. The latch 200c of the locking pin 200b is hooked on the edge of the rubber bush 220, so that the side cover 200 does not easily come away from the side plate 210. In the two-wheeled motor vehicle 100 according to the second embodiment described above, as well as the first embodiment, the side cover 200 and the side plate 210 can be rigidly fixed to each other.

## Claims

1. A two-wheeled motor vehicle comprising:
a body frame (24) including a first frame member (22) extending from a body frame (24) including a first frame member (22) extending from a head pipe (21) in a fore-and-aft direction of the vehicle;
a right and a left outside frame (50L, 50R) which are fixed to a right and left side of the body frame (24), respectively, while being exposed to the outside, located between a front wheel (3) and a rear wheel (4) of the vehicle, each outside frame (50L, 50R) is provided with a footrest (80) attached thereon on which riders put their feet; and
a right and a left exterior cover (6) which are disposed adjacently above the right and the left outside frames (50L, 50R) and arranged to be exposed to a right and a left side of the vehicle, respectively, each exterior cover (6) including a first cover surface (62g), and a second cover surface (62c/62d) extending downward toward the respective outside frame, wherein
each outside frame (50L, 50R) has a frame end surface facing the respective exterior cover; a first frame surface which is positioned below and extends continuous from the first cover surface (62g); and a second frame surface (50c/50d) which is positioned below and extends continuous from the second cover surface (62c/62d), and
the frame end surface includes a locking structure (51L, 52L, 51R, 52R) locking the respective exterior cover (6), the locking structure extending to a position overlapped with the respective exterior cover in a side view,
**characterized in that** the first cover surface (62g) and the second cover surface (62c/62d) being arranged to make an angle therebetween and
the outside frames (50L, 50R) support a pivot of a rear swing arm (60).

2. The two-wheeled motor vehicle according to Claim 1, wherein
a first cover edge line (62c) is formed between the first cover surface (62g) and the second cover surface (62c/62d), and
a first frame edge line (50c) which extends continuous from the first cover edge line (62c) is formed between the first frame surface and the second frame surface.

3. The two-wheeled motor vehicle according to Claim 2, wherein
each exterior cover (6) includes a third cover surface (62e/62f) extending toward the respective outside frame and forming a second cover edge line (62e) between the first cover surface (62g) and the third cover surface (62e/62f), the second cover edge line (62e) extending parallel with the first cover edge line (62c) between the first cover surface (62g) and the second cover surface (62c/62d), and
each outside frame (50L, 50R) includes a third frame surface (50e/50f) which extends continuous from the third cover surface and forms a second frame edge line (50e) between the first frame surface and the third frame surface (50e/50f), the second frame edge line (50e) extending parallel with the first frame edge line (50c) between the first frame surface and the second frame surface (50c/50d), the second frame edge line (50e) extending continuous from the second cover edge line (62e).

4. The two-wheeled motor vehicle according to Claim 1, wherein
each exterior cover (6) includes a cover end surface (63) facing the frame end surface,
the locking structure (51L, 51R, 52L, 52R) includes a locking piece extending toward the cover end surface (63), and
the cover end surface (63) has an insertion hole (63a) formed thereon, into which the locking piece is inserted.

5. The two-wheeled motor vehicle according to Claim 4, wherein the locking piece and the insertion hole (63a) are locked through a cushioning member (45) made of elastic material.

6. The two-wheeled motor vehicle according to Claim 5, wherein the cushioning member (45) is arranged to cover the locking piece.

7. The two-wheeled motor vehicle according to Claim 1, wherein the frame end surface includes a plurality of the locking structures (51L, 51R, 52L, 52R).

8. The two-wheeled motor vehicle according to Claim 1, wherein
the locking structure extends on the back side of the respective exterior cover (6), and
each exterior cover (6) includes a locking piece extending to the locking structure and inserted into a locking hole constituting the locking structure.

9. The two-wheeled motor vehicle according to Claim 1, wherein the body frame (24) further comprises a second frame member (25) arranged on the inner side, defined in a vehicle width direction, of the outside frames, wherein
the rear swing arm (6) is pivotally supported by the outside frames (50L, 50R) and the second frame member (25).

## Patentansprüche

1. Ein zweirädriges Kraftfahrzeug, das folgende Merkmale aufweist:
einen Karosserierahmen (24), der ein erstes Rahmenbauglied (22) umfasst, das sich in einer Längsrichtung des Fahrzeugs von einer Hauptleitung (21) aus erstreckt;
einen rechten und einen linken Außenrahmen (50L, 50R), die an einer rechten beziehungsweise einer linken Seite des Karosserierahmens (24) befestigt sind, während sie nach außen hin frei liegen und zwischen einem Vorderrad (3) und einem Hinterrad (4) des Fahrzeugs angeordnet sind, wobei jeder Außenrahmen (50L, 50R) mit einer daran befestigten Fußraste (80) versehen ist, auf die Fahrer ihre Füße stellen; und
eine rechte und eine linke Außenabdeckung (6), die angrenzend über dem rechten und dem linken Außenrahmen (50L, 50R) positioniert und dazu angeordnet sind, zu einer rechten beziehungsweise einer linken Seite des Fahrzeugs hin frei zu liegen, wobei jede Außenabdeckung (6) eine erste Abdeckungsoberfläche (62g) und eine zweite Abdeckungsoberfläche (62c/62d) umfasst, die sich zu dem jeweiligen Außenrahmen hin nach unten erstrecken, wobei
jeder Außenrahmen (50L, 50R) eine Rahmenendoberfläche, die der jeweiligen Außenabdeckung zugewandt ist; eine erste Rahmenoberfläche, die unter der ersten Abdeckungsoberfläche (62g) positioniert ist und sich von derselben aus kontinuierlich erstreckt; und eine zweite Rahmenoberfläche (50c/50d), die unter der zweiten Abdeckungsoberfläche (62c/62d) positioniert ist und sich von derselben aus kontinuierlich erstreckt, aufweist, und
die Rahmenendoberfläche eine Verriegelungsstruktur (51 L, 52L, 51 R, 52R) umfasst, die die jeweilige Außenabdeckung (6) verriegelt, wobei sich die Verriegelungsstruktur zu einer Position erstreckt, die mit der jeweiligen Außenabdeckung in einer Seitenansicht überlappt ist,
**dadurch gekennzeichnet, dass** die erste Abdeckungsoberfläche (62g) und die zweite Abdeckungsoberfläche (62c/62d) dazu angeordnet sind, einen Winkel zwischen sich zu bilden, und
die Außenrahmen (50L, 50R) einen Drehpunkt eines hinteren Schwingarms (60) tragen.

2. Das zweirädrige Kraftfahrzeug gemäß Anspruch 1, bei dem
eine erste Abdeckungsrandlinie (62c) zwischen der ersten Abdeckungsoberfläche (62g) und der zweiten Abdeckungsoberfläche (62c/62d) gebildet ist, und
eine erste Rahmenrandlinie (50c), die sich von der ersten Abdeckungsrandlinie (62c) aus kontinuierlich erstreckt, zwischen der ersten Rahmenoberfläche und der zweiten Rahmenoberfläche gebildet ist.

3. Das zweirädrige Kraftfahrzeug gemäß Anspruch 2, bei dem
jede Außenabdeckung (6) eine dritte Abdeckungsoberfläche (62e/62f) umfasst, die sich zu dem jeweiligen Außenrahmen hin erstreckt und eine zweite Abdeckungsrandlinie (62e) zwischen der ersten Abdeckungsoberfläche (62g) und der dritten Abdeckungsoberfläche (62e/62f) bildet, wobei sich die zweite Abdeckungsrandlinie (62e) parallel zu der ersten Abdeckungsrandlinie (62c) zwischen der ersten Abdeckungsoberfläche (62g) und der zweiten Abdeckungsoberfläche (62c/62d) erstreckt, und
jeder Außenrahmen (50L, 50R) eine dritte Rahmenoberfläche (50e/50f) umfasst, die sich von der dritten Abdeckungsoberfläche aus kontinuierlich erstreckt und eine zweite Rahmenrandlinie (50e) zwischen der ersten Rahmenoberfläche und der dritten Rahmenoberfläche (50e/50f) bildet, wobei sich die zweite Rahmenrandlinie (50e) parallel zu der ersten Rahmenrandlinie (50c) zwischen der ersten Rahmenoberfläche und der zweiten Rahmenoberfläche (50c/50d) erstreckt, wobei sich die zweite Rahmenrandlinie (50e) von der zweiten Abdeckungsrandlinie (62e) aus kontinuierlich erstreckt.

4. Das zweirädrige Kraftfahrzeug gemäß Anspruch 1, bei dem
jede Außenabdeckung (6) eine Abdeckungsendoberfläche (63) umfasst, die der Rahmenendoberfläche zugewandt ist,
die Verriegelungsstruktur (51L, 51 R, 52L, 52R) ein Verriegelungsstück umfasst, das sich zu der Abdeckungsendoberfläche (63) hin erstreckt, und
die Abdeckungsendoberfläche (63) ein auf derselben gebildetes Einfügungsloch (63a) aufweist, in das das Verriegelungsstück eingefügt wird.

5. Das zweirädrige Kraftfahrzeug gemäß Anspruch 4, bei dem das Verriegelungsstück und das Einfügungsloch (63a) durch ein Federungsbauglied (45), das aus elastischem Material hergestellt ist, verriegelt sind.

6. Das zweirädrige Kraftfahrzeug gemäß Anspruch 5, bei dem das Federungsbauglied (45) dazu angeordnet ist, das Verriegelungsstück abzudecken.

7. Das zweirädrige Kraftfahrzeug gemäß Anspruch 1, bei dem die Rahmenendoberfläche eine Mehrzahl der Verriegelungsstrukturen (51L, 51R, 52L, 52R) umfasst.

8. Das zweirädrige Kraftfahrzeug gemäß Anspruch 1, bei dem
sich die Verriegelungsstruktur auf der Rückseite der jeweiligen Außenabdeckung (6) erstreckt und
jede Außenabdeckung (6) ein Verriegelungsstück umfasst, das sich zu der Verriegelungsstruktur hin erstreckt und in ein Verriegelungsloch, das die Verriegelungsstruktur bildet, eingefügt ist.

9. Das zweirädrige Kraftfahrzeug gemäß Anspruch 1, bei dem der Karosserierahmen (24) ferner ein zweites Rahmenbauglied (25) aufweist, das auf der in einer Fahrzeugbreitenrichtung definierten Innenseite der Außenrahmen angeordnet ist, wobei
der hintere Schwingarm (6) seitens der Außenrahmen (50L, 50R) und des zweiten Rahmenbauglieds (25) drehbar getragen wird.

## Revendications

1. Véhicule à moteur à deux roues, comprenant:
un châssis de corps (24) comportant un premier élément de châssis (22) s'étendant d'un tuyau principal (21) dans une direction vers l'avant et l'arrière du véhicule;
un châssis extérieur droit et un châssis extérieur gauche (50L, 50R) qui sont fixés respectivement à un côté droit et un côté gauche du châssis de corps (24), tout en étant exposés à l'extérieur, situés entre une roue avant (3) et une roue arrière (4) du véhicule, chaque châssis extérieur (50L, 50R) étant pourvu d'un repose-pied (80) y fixé sur lequel les conducteurs posent leurs pieds; et
un couvercle extérieur droit et un couvercle extérieur gauche (6) qui sont disposés de manière adjacente au-dessus des châssis extérieurs droit et gauche (50L, 50R), et aménagés de manière à être exposés respectivement à un côté droit et un côté gauche du véhicule, chaque couvercle extérieur (6) comportant une première surface de couvercle (62g), et une deuxième surface de couvercle (62c/62d) s'étendant vers le bas vers le châssis extérieur respectif, où
chaque châssis extérieur (50L, 50R) présente une surface d'extrémité de châssis faisant face au couvercle extérieur respectif; une première surface de châssis qui est positionnée au-dessous et s'étend en continu à partir de la première surface de couvercle (62g); et une deuxième surface de châssis (50c/50d) qui est positionnée au-dessous et s'étend en continu à partir de la deuxième surface de couvercle (62c/62d), et
la surface d'extrémité de châssis comporte une structure de verrouillage (51L, 52L, 51R, 52R) verrouillant le couvercle extérieur respectif (6), la structure de verrouillage s'étendant vers une position en chevauchement avec le couvercle extérieur respectif en vue latérale,
**caractérisé par le fait que** la première surface de couvercle (62g) et la deuxième surface de couvercle (62c/62d) sont disposées de manière à former un angle entre elles, et
les châssis extérieurs (50L, 50R) supportent un pivot d'un bras de pivotement arrière (60).

2. Véhicule à moteur à deux roues selon la revendication 1, dans lequel
une première ligne de bord de couvercle (62c) est formée entre la première surface de couvercle (62g) et la deuxième surface de couvercle (62c/62d), et
une première ligne de bord de châssis (50c) qui s'étend en continu à partir de la première ligne de bord de couvercle (62c) est formée entre la première surface de châssis et la deuxième surface de châssis.

3. Véhicule à moteur à deux roues selon la revendication 2, dans lequel
chaque couvercle extérieur (6) comporte une troisième surface de couvercle (62e/62f) s'étendant vers le châssis extérieur respectif et formant une deuxième ligne de bord de couvercle (62e) entre la première surface de couvercle (62g) et la troisième surface de couvercle (62e/62f), la deuxième ligne de bord de couvercle (62e) s'étendant parallèle à la première ligne de bord de couvercle (62c) entre la première surface de couvercle (62g) et la deuxième surface de couvercle (62c/62d), et
chaque châssis extérieur (50L, 50R) comporte une troisième surface de châssis (50e/50f) qui s'étend en continu à partir de la troisième surface de couvercle et forme une deuxième ligne de bord de châssis (50e) entre la première surface de châssis et la troisième surface de châssis (50e/50f) qui s'étend en continu à partir de la troisième surface de couvercle et forme une deuxième ligne de bord de châssis (50e) entre la première surface de châssis et la troisième surface de châssis (50e/50f), la deuxième ligne de bord de châssis (50e) s'étendant parallèle à la première ligne de bord de châssis (50c) entre la première surface de châssis et la deuxième surface de châssis (50c/50d), la deuxième ligne de bord de châssis (50e) s'étendant en continu à partir de la deuxième ligne de bord de couvercle (62e).

4. Véhicule à moteur à deux roues selon la revendication 1, dans lequel
chaque couvercle extérieur (6) comporte une surface d'extrémité de couvercle (63) faisant face à la surface d'extrémité de châssis,
la structure de verrouillage (51L, 51R, 52L, 52R) comporte une pièce de verrouillage s'étendant vers la surface d'extrémité de couvercle (63), et
la surface d'extrémité de couvercle (63) présente un trou d'insertion (63a) y formé dans lequel et introduite la pièce de verrouillage.

5. Véhicule à moteur à deux roues selon la revendication 4, dans lequel la pièce de verrouillage et le trou d'insertion (63a) sont verrouillés par l'intermédiaire d'un élément d'amortissement (45) réalisé en un matériau élastique.

6. Véhicule à moteur à deux roues selon la revendication 5, dans lequel l'élément d'amortissement (45) est aménagé de manière à couvrir la pièce de verrouillage.

7. Véhicule à moteur à deux roues selon la revendication 1, dans lequel la surface d'extrémité de châssis comporte une pluralité de structures de verrouillage (51L, 51R, 52L, 52R).

8. Véhicule à moteur à deux roues selon la revendication 1, dans lequel
la structure de verrouillage s'étend sur le côté arrière du couvercle extérieur respectif (6), et
chaque couvercle extérieur (6) comporte une pièce de verrouillage s'étendant vers la structure de verrouillage et introduite dans un trou de verrouillage constituant la structure de verrouillage.

9. Véhicule à moteur à deux roues selon la revendication 1, dans lequel le châssis de corps (24) comprend par ailleurs un deuxième élément de châssis (25) disposé sur le côté intérieur, défini dans une direction de la largeur du véhicule, des châssis extérieurs, dans lequel
le bras de pivotement arrière (6) est supporté en pivotement par les châssis extérieurs (50L, 50R) et le deuxième élément de châssis (25).
